# EUROPÄISCHE PATENTSCHRIFT

(11) **EP 0 762 015 B1**
(45) Veröffentlichungstag und Bekanntmachung des Hinweises auf die Patenterteilung: **21.10.1998**
(21) Anmeldenummer: 96113494.7
(22) Anmeldetag: 22.08.1996
(51) Int. Cl.: F16H 25/20

(54) **Stellantrieb**
Actuator
Actionneur

(30) Priorität: 04.09.1995 DE 19532589
(43) Veröffentlichungstag der Anmeldung: 12.03.1997
(73) Patentinhaber: SIEMENS AKTIENGESELLSCHAFT, 80333 München (DE)
(72) Erfinder: Obermeyer, Friedrich, Dipl.-Ing. (FH), 90537 Feucht (DE); Conrad, Alfred, 90579 Langenzenn (DE)

(56) Entgegenhaltungen:
- DE-A- 3 615 285

## Beschreibung

Die Erfindung betrifft einen Stellantrieb, mit einem elektrischen Antriebsmotor, der über ein aus mindestens einer Schnecke und einem Schneckenrad bestehendes Getriebe eine mit einem Verstellglied gekoppelte Verstellspindel antreibt, welcher Antrieb ferner ein Zusatzzahnrad zur Wegerfassung des Verstellgliedes aufweist.

Ein solcher Stellantrieb ist durch die DE-A-36 15 285 bekannt. Bei diesem Antrieb ist am Außenumfang einer mit dem Schneckenrad drehfest verbundenen und die Verstellspindel aufnehmenden Spindelmutter ein zusätzliches Gewinde vorgesehen, über das ein zusätzliches Zahnrad angetrieben wird. Über dieses zusätzliche Zahnrad wird die jeweilige Betriebsstellung des mit der Verstellspindel als Verstellglied gekoppelten Ventils erfaßt.

Der Erfindung liegt die Aufgabe zugrunde, einen Stellantrieb der gattungsgemäßen Art dahingehend zu verbessern, daß die Stellungserfassung des Verstellgliedes wesentlich genauer und mit weniger Elementen möglich ist.

Die Lösung der gestellten Aufgabe gelingt nach der Erfindung dadurch, daß das Zusatzzahnrad direkt mit der Schnecke in Eingriff steht und von ihr angetrieben wird. Der Antrieb des Zusatzzahnrades durch die Schnecke hat erstens den Vorteil, das kein gesondertes Gewinderad vorgesehen werden muß und das zweitens das Zusatzzahnrad mit einer wesentlich höheren Drehzahl angetrieben wird, wodurch die Genauigkeit bei der Stellungserfassung ebenfalls erhöht wird.

Gemäß einer Ausgestaltung der Erfindung ist das Zusatz zahnrad ein geradverzahntes Stirnrad, bei dem der Flankenwinkel der Zähne dem Axialmodul der Schnecke angepaßt ist. Damit ist die Stellungserfassung mit einem konstruktiv einfachen Element möglich.

Erfindungsgemäß ist das Zusatzzahnrad mit einer seine Umdrehungen erfassenden Auswerteeinrichtung verbunden. Eine solche Auswertereinrichtung kann ein durch das Zusatzzahnrad verstellbares Potentiometer enthalten, durch dessen Stellung dann die jeweilige Betriebsstellung des Verstellgliedes in analoger Weise wiedergegeben wird. Es besteht aber auch die Möglichkeit mittels elektronischer Elemente die Auswertung auf digitaler Basis durchzuführen.

Anhand eines in der Zeichnung dargestellten Ausführungsbeispieles wird die Erfindung nachfolgend näher beschrieben. Es zeigen:

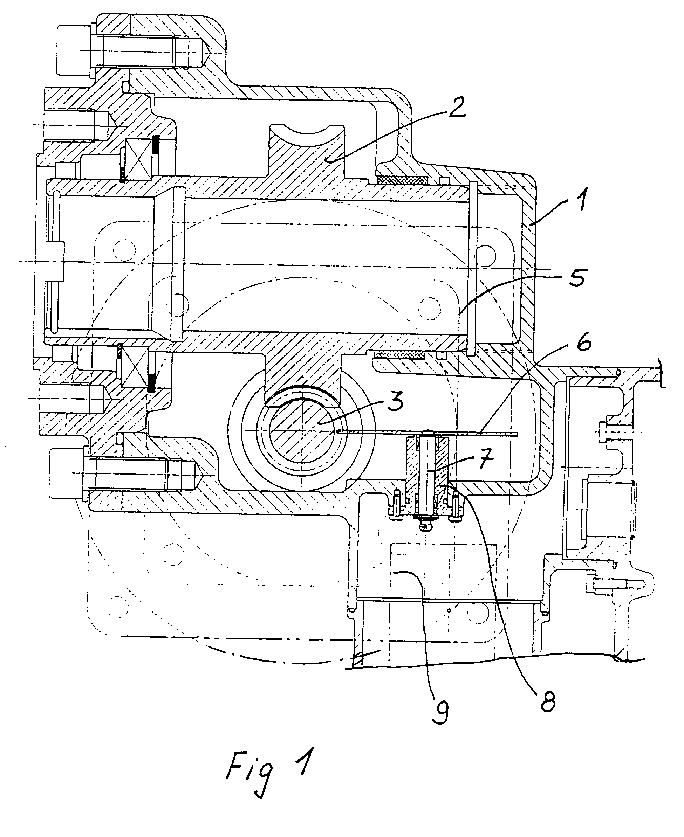

- Fig. 1: einen Teilschnitt eines Stellantriebes
- Fig. 2 und 3: jeweils ein von der Schnecke des Stellantriebes angetriebenes Zusatzzahnrad.

Mit 1 ist das Gehäuse eines Stellantriebes bezeichnet, in dem ein Schneckenrad 2 drehbar gelagert ist. Das Schneckenrad 2 ist in bekannter Weise mit einer auf einer Verstellspindel angeordneten Spindelmutter gekoppelt. Die Verstellspindel und die Spindelmutter sind in der Zeichnung nicht dargestellt. Durch die von dem Schneckenrad 2 angetriebene Spindelmutter wird die Verstellspindel und damit ein mit ihr verbundenes Verstellglied in axialer Richtung verstellt.

Der Antrieb des Schneckenrades 2 erfolgt mittels einer Schnecke 3, welche mit einem in der Zeichnung durch eine gestrichelte Umrißlinie angedeuteten Antriebsmotor 5 gekuppelt ist.

Der Schnecke 3 ist ferner ein Zusatzzahnrad 6 zugeordnet, welches mit seiner Welle 7 in einer Lagerstelle 8 des Gehäuses 1 drehbar gelagert ist. Die Welle 7 greift in das Gehäuse einer Auswerteeinrichtung 9 ein. In dieser Auswerteeinrichtung 9 werden die Umdrehungen des Zusatzzahnrades 6 in analoger oder digitaler Weise erfaßt und daraus entsprechende Steuersignale gebildet, durch die der Antrieb bei erreichen einer bestimmten Stellung stillgesetzt werden kann.

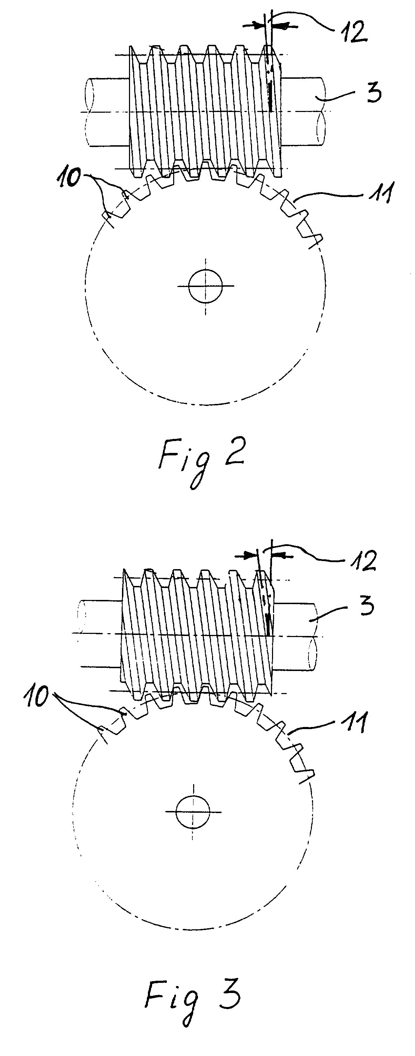

Wie aus den Figuren 2 und 3 zu ersehen ist, kann das Zusatzzahnrad 6 als einfaches geradverzahntes Stirnrad ausgebildet sein. Durch entsprechende Gestaltung der Zähne 10 und des Zahnabstandes 11 dieses Stirnrades kann dieses mit Schnecken 3 zusammenarbeiten, die unterschiedliche Mittensteigungswinkel 12 aufweisen. Damit können innerhalb eines bestimmten Bereiches des Mittensteigungswinkels 12 Zusatzzahnräder 6 in der gleichen Ausführungsform verwendet werden.

## Patentansprüche

1. Stellantrieb, mit einem elektrischen Antriebsmotor (5), der über ein aus mindestens einer Schnecke (3) und einem Schneckenrad (2) bestehendes Getriebe eine mit einem Verstellglied gekoppelte Verstellspindel antreibt, welcher Antrieb ferner ein Zusatzzahnrad (6) zur Wegerfassung des Verstellgliedes aufweist,
**dadurch gekennzeichnet,**
daß das Zusatzzahnrad (6) direkt mit der Schnecke (3) in Eingriff steht und von ihr angetrieben wird.

2. Stellantrieb nach Anspruch 1,
**dadurch gekennzeichnet,**
daß das Zusatzzahnrad (6) ein geradverzahntes Stirnrad ist, bei dem der Flankenwinkel der Zähne (10) dem Axialmodul der Schnecke (4) angepaßt ist.

3. Stellantrieb nach Anspruch 1 oder 2,
**dadurch gekennzeichnet,**
daß das Zusatzzahnrad (6) mit einer seine Umdrehungen erfassenden Auswerteeinrichtung (9) verbunden ist.

## Claims

1. Actuator, having an electric drive motor (5) which, by way of a gearing comprising at least one worm (3) and one worm wheel (2), drives an adjusting spindle coupled to an adjusting element, which drive furthermore has an additional gear wheel (6) for the displacement detection of the adjusting element, characterised in that the additional gear wheel (6) is directly engaged with the worm (3) and is driven thereby.

2. Actuator according to claim 1, characterised in that the additional gear wheel (6) is a straight-tooth spur gear, in which the gearing angle of the teeth (10) matches the axial module of the worm (4).

3. Actuator according to claim 1 or 2, characterised in that the additional gear wheel (6) is connected to an evaluating device (9) which detects its revolutions.

## Revendications

1. Servomoteur comportant un moteur (5) d'entraînement électrique qui entraîne une tige de réglage couplée à un élément de réglage par l'intermédiaire d'une transmission constituée d'au moins une vis (3) sans fin et d'une roue (2) à vis sans fin. ce dispositif d'entraînement comportant de plus une roue (6) dentée supplémentaire pour déterminer le chemin de l'élément de réglage, caractérisé en ce que la roue (6) dentée supplémentaire est en prise directe avec la vis (3) sans fin et est entraînée par elle.

2. Servomoteur suivant la revendication 1, caractérisé en ce que la roue (6) dentée supplémentaire est une roue frontale à denture droite dans laquelle l'angle de prise des dents (10) est adapté au module axial de la vis (3) sans fin.

3. Servomoteur suivant la revendication 1 ou 2, caractérisé en ce que la roue (6) dentée supplémentaire est reliée à un dispositif (9) d'exploitation détectant ses rotations.
